# EUROPEAN PATENT APPLICATION

(11) **EP 2 905 504 A2**
(43) Date of publication of application: **12.08.2015**
(21) Application number: 15152949.2
(22) Date of filing: 28.01.2015
(51) Int. Cl.: F16F 9/36, F16F 9/48, F16F 9/18

(54) **Isolators enabling large rotation angle capabilities with highly restricted damper orifices**

(30) Priority: 11.02.2014 US 201414177916
(71) Applicant: Honeywell International Inc., Morristown, NJ 07962-2245 (US)
(72) Inventor: Hindle, Timothy, Morristown, NJ New Jersey 07962-2245 (US); Barber, Tim Daniel, Morristown, NJ New Jersey 07962-2245 (US); Young, Ken, Morristown, NJ New Jersey 07962-2245 (US)
(74) Representative: Houghton, Mark Phillip

(57) **Abstract**

Embodiments of an isolator (10) are provided. In one embodiment, the isolator includes a damper housing (22) having a radially-extending partition wall (38) through which a central opening (30) is formed. First and second hydraulic chambers (56, 58) are located on opposing sides of the radially-extending partition wall and may be filled with a damping fluid. At least one restricted orifice (60) is formed through the damper housing and fluidly couples the first and second hydraulic chambers. The isolator further includes a damper piston (20), which extends through the central opening, which is exposed to the damping fluid when the first and second hydraulic chambers are filled therewith, and which is configured to translate along a working axis (12) with respect to the damper housing during operation of the isolator.

## Description

### TECHNICAL FIELD

The present invention relates generally to isolation devices and, more particularly, to isolators including fluid dampers and allowing scaling of orifice size to, for example, highly reduced dimensions without limiting rotation angle capabilities.

### BACKGROUND

Isolators commonly include fluid dampers having opposing hydraulic chambers, which are fluidly coupled by an annulus or other restricted orifice and filled with a damping fluid. The viscosity of the damping fluid may be selected based upon the performance requirements of the isolator, including the isolator's operative temperature range. Generally, damping fluids having lower viscosities tend to resist crystallization or solidification and, thus, flow more readily under low temperature conditions. Consequently, in instances wherein the isolator is required to operate at extremely depressed or cryogenic temperatures, such as temperatures approaching or falling below -30° Celsius (°C), a damping fluid having a very low viscosity (e.g., in the range of about 1 to 10 centistokes or "cS") may be selected. To enable the usage of such a low viscosity or thin damping fluid, while maintaining isolator performance at acceptable levels, it may be necessary to impart the flow orifice or orifices with highly reduced dimensions. This can present certain difficulties. In instances wherein the orifice assumes the form of an annulus, manufacturing tolerances may render the production of an annulus having a very small radial width unreliable or impractical. Moreover, an isolator having such a highly restricted annulus generally cannot accommodate large angular misalignments between mount points without contact or touch-down between internal surfaces defining the annulus. Other isolator designs are possible, but tend to be characterized by undesirably large envelopes, high sprung masses, high overall weights, increased part counts, and other such limitations.

It would thus be desirable to provide embodiments of an isolator including a fluid damper and enabling damper orifice size to be adjusted independently of the rotation angle capability of the isolator. Advantageously, embodiments of such an isolator could be produced to include highly restrictive flow orifices suitable for usage with low viscosity damping fluids, while simultaneously imparting the isolator with a relatively large rotation angle capability. Ideally, embodiments of such an isolator would further be readily manufacturable, relatively compact, lightweight, and characterized by a relatively low part count and sprung mass. Other desirable features and characteristics of embodiments of the present invention will become apparent from the subsequent Detailed Description and the appended Claims, taken in conjunction with the accompanying drawings and the foregoing Background.

### BRIEF SUMMARY

Embodiments of an isolator are provided. In one embodiment, the isolator includes a damper housing having a radially-extending partition wall through which a central opening is formed. First and second hydraulic chambers are located on opposing sides of the radially-extending partition wall and may be filled with a damping fluid. At least one restricted orifice is formed through the damper housing and fluidly couples the first and second hydraulic chambers. The isolator further includes a damper piston, which extends through the central opening, which is exposed to the damping fluid when the first and second hydraulic chambers are filled therewith, and which is configured to translate along the working axis with respect to the damper housing during operation of the isolator.

In a further embodiment, the isolator includes opposing hydraulic chambers, which are configured to be filled with a damping fluid; and a damper piston, which has a piston shaft generally co-axial with the working axis. The damper piston is exposed to the damping fluid when the opposing hydraulic chambers are filled therewith. An annular air gap or void surrounds the piston shaft and is circumscribed by the opposing hydraulic chambers.

In a still further embodiment, the isolator includes first and second hydraulic chambers configured to be filled with a damping fluid. A radially-extending partition wall is disposed between the first and second hydraulic chambers and has a central opening therein. At least one restricted orifice is formed through the radially-extending partition wall and fluidly couples the first and second hydraulic chambers. A damper piston is movably coupled to the radially-extending partition wall and includes a piston shaft extending through the central opening. First and second externally-pressurized bellows are each sealingly coupled between the radially-extending partition wall and the damper piston. The isolator further includes an annular air gap or void, which is bounded along its inner circumference by the piston shaft and along its outer circumference by the first externally-pressurized bellows, the second externally-pressurized bellows, and the central opening.

### BRIEF DESCRIPTION OF THE DRAWINGS

At least one example of the present invention will hereinafter be described in conjunction with the following figures, wherein like numerals denote like elements, and:
FIG. 1 is an isometric view of an isolator including a fluid damper, as illustrated in accordance with an exemplary and non-limiting embodiment of the present invention;
FIG. 2 is an isometric cross-sectional view of the exemplary isolator shown in FIG. 1 and illustrated prior to filling with a damping fluid; and
FIG. 3 is a side cross-sectional view of the exemplary isolator shown in FIGs. 1 and 2 and illustrated after filling with a damping fluid.

### DETAILED DESCRIPTION

The following Detailed Description is merely exemplary in nature and is not intended to limit the invention or the application and uses of the invention. Furthermore, there is no intention to be bound by any theory presented in the preceding Background or the following Detailed Description. As appearing herein, the term "about" is utilized to denote a disparity of less than 10%. As further appearing herein, the term "orifice" is utilized to denote any opening, flow passage, or channel formed through a larger structure and fluidly coupling at least two hydraulic chambers. Finally, as still further appearing herein, the term "isolator" is utilized in reference to a device that reduces the transmission of vibrations or other disturbance forces between at least two objects or mount points and that includes or assumes the form of a fluid damper.

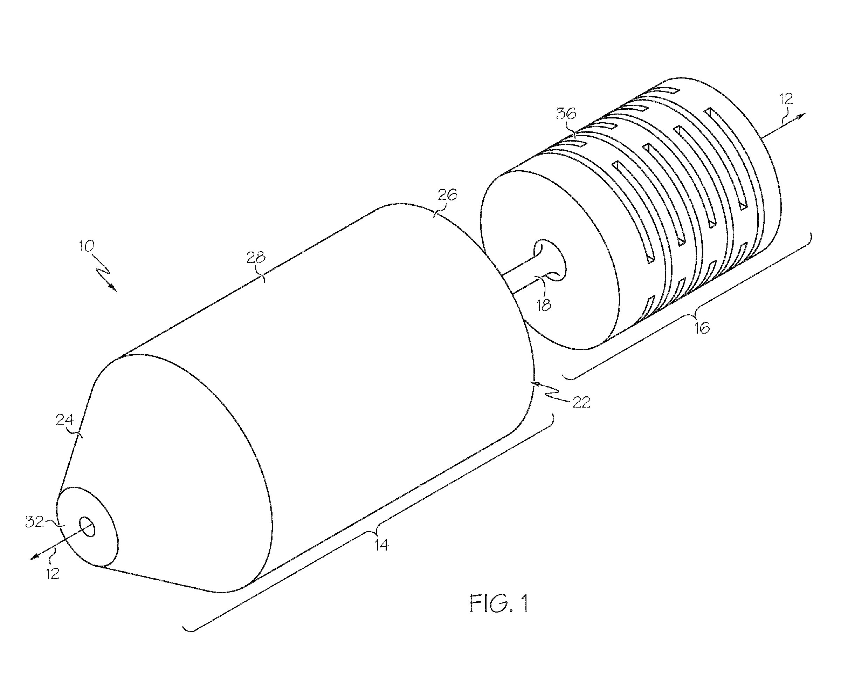

FIGs. 1, 2, and 3 are isometric, isometric cross-sectional, and side cross-sectional views, respectively, of an isolator 10, as illustrated in accordance with an exemplary embodiment of the present invention. In this case, isolator 10 is a three parameter device that behaves, at least in part, as a primary spring coupled in parallel with a series-coupled secondary spring and fluid damper. It will also be noted that isolator 10 is a single degree-of-freedom (axially-damping) device having a working axis **12** corresponding to the longitudinal axis or centerline of isolator **10.** Isolator **10** is thus well-suited for usage in a multi-point mounting arrangement; e.g., isolator **10** can be combined with a number of like isolators in, for example, a hexapod or octopod-type mounting arrangement to provide high fidelity damping in six degrees of freedom. Such multi-point mounting arrangements are usefully employed in spacecraft isolation systems utilized to attenuate vibrations or impact forces transmitted between a spacecraft and a payload carried by the spacecraft. It is emphasized, however, that isolator **10** can be utilized in any spaceborne, airborne, terrestrial, or other application wherein it is desired to attenuate vibrations or impact loads between two objects or mount points.

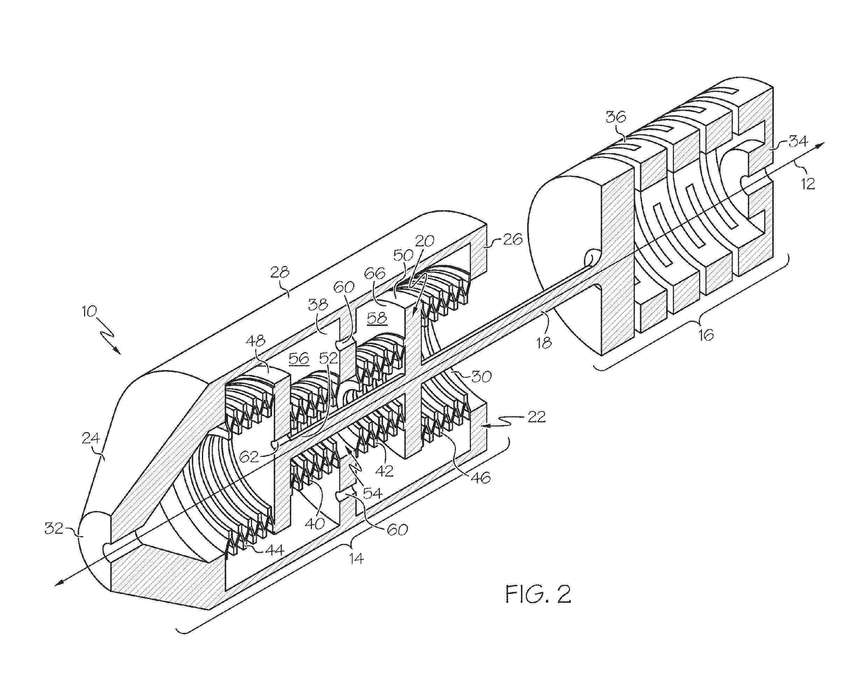

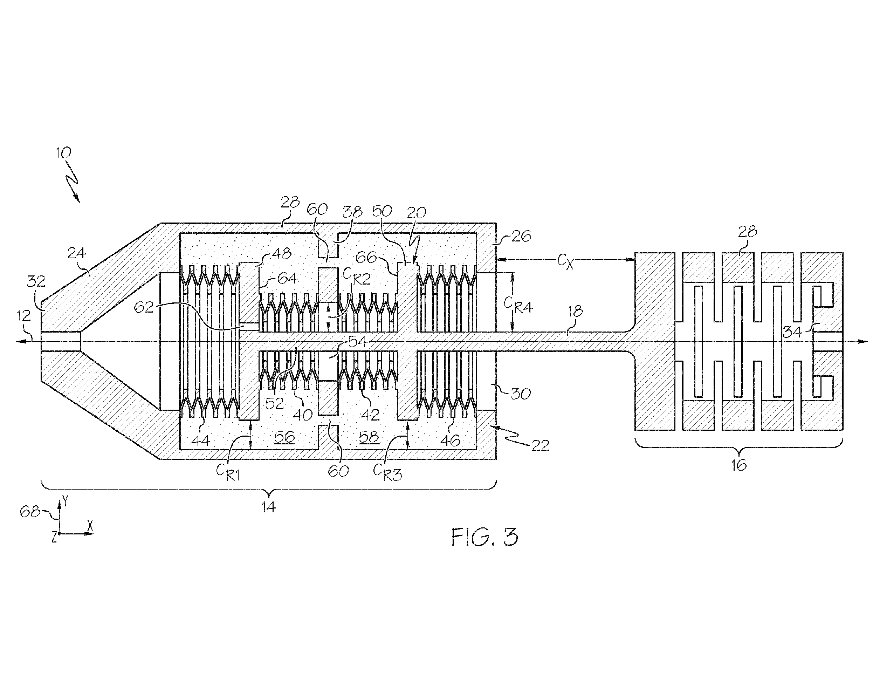

Isolator **10** includes a fluid damper **14** and an end piece **16,** which are longitudinally spaced along working axis **12.** Fluid damper **14** includes, in turn, a damper piston **20** (FIGs. 2 and 3) contained within a damper housing **22.** Damper housing **22** has a first end portion **24,** a second end portion **26** proximate end piece **16,** and a tubular body **28** between end portions **24** and **26.** A central opening **30** (FIGs. 2 and 3) is provided in second end portion **26** of damper housing **22.** An axially-elongated connector rod **18** or "stinger" extends from damper piston **20,** through opening **30,** and to end piece **16** to fixedly join piston **20** to end piece **16.** Damper piston **20,** connector rod **18,** and end piece **16** translate with respect to damper housing **22** along working axis **12** during operation of isolator **10.** Connector rod **18** is imparted with a sufficient length to provide an axial standoff or clearance between end piece **16** and damper housing **22** (identified in FIG. 3 as "Cx") allowing such relative translational movement. Additional axial clearances are also provided between damper piston **20** and the interior surfaces of damper housing **22** to allow piston **20** to freely translate within housing **22,** as described more fully below.

Isolator **10** further includes at least two mounting interfaces permitting installation of isolator **10** within a larger isolation system. For example, as shown in FIGs. 1-3, a first mounting interface **32** may be integrally formed in end portion **24** of damper housing **22** opposite end piece **16.** Similarly, as shown in FIGs. 2 and 3, a second mounting interface **34** may be integrally formed in an end wall of end piece **16** opposite fluid damper **14**. When isolator **10** is installed within an isolation system, mounting interfaces **32** and **34** may be attached to the bodies, structures, or devices between which it is desired to reduce the transmission of disturbance forces. Any suitable attachment hardware (e.g., brackets and fasteners) or other attachment means (e.g., welding, soldering, or bonding) may be utilized to provide the desired connections. In certain implementations, mounting interface **32** may be attached to palette or bench supporting a vibration-sensitive payload (e.g., an optical payload) or a vibration-generating payload (e.g., an array of control moment gyroscopes, reaction wheels, or other attitude adjustment devices), while opposing mounting interface **34** is mounted to a spacecraft, an aircraft, or other platform carrying the payload. Alternatively, this mounting arrangement may be inverted such that mounting interface **32** is mounted to the platform, while mounting interface **34** is attached to the payload.

With continued reference to the exemplary embodiment shown in FIGs. 1-3, end piece **16** includes a tubular body in which a machined spring **36** is formed. Specifically, a number of openings or voids may be cut into or otherwise formed in the annular sidewall of end piece **16** to define spring **36**. Machined spring **36** is coupled in series with damper piston **20** (FIGs. 2 and 3) and is integral to tuning of isolator **10.** For this reason, machined spring **36** is commonly referred to as a "tuning spring." End piece **16** may include a different type of tuning spring (e.g., a coil spring) or may not include a tuning spring in other implementations. Additionally, in further embodiments of isolator **10,** end piece **16** may be fabricated to include one or more cutouts or regions of reduced thickness, which serve as compliant flexure points to help accommodate angular misalignments between mounting interfaces **32** and **34** occurring during original installation of isolator **10** and/or during operation of isolator **10.**

Two opposing sets or pairs of bellows are contained within damper housing **22:** (i) a first pair of opposing bellows **40** and **42,** and (ii) a second pair of opposing bellows **44** and **46.** Bellows **40, 42, 44,** and **46** may be, for example, edge-welded bellows formed from a stack of convolutes and fabricated from a metal or alloy. Bellows **40** and **42** are referred to herein as the "inner bellows" in view of their positioning between bellows **44** and **46,** as taken along working axis **12**. Conversely, bellows **44** and **46** are referred to as the "outer bellows" in view of their positioning outside of inner bellows **40** and **42.** Stated differently, outer bellows **44** and **46** flank inner bellows **40** and **42,** as viewed in cross-section taken along a cut plane parallel to working axis **12.** The outer diameters of outer bellows **44** and **46** vary as compared to the outer diameters of inner bellows **40** and **42.** For example, outer bellows **44** and **46** may be sized to each have a first outer diameter, while inner bellows **40** and **42** may be sized to have a second outer diameter less than the first outer diameter; e.g., the outer diameters of inner bellows **40** and **42** may be at least 10% or, perhaps, at least 25% less than the outer diameters of bellows **44** and **46.** As generally illustrated in FIGs. 2 and 3, the dimensions of outer bellows **44** (e.g., the outer diameter, length, and wall thickness) may be substantially equivalent to the dimensions of outer bellows **46,** and the dimensions of inner bellows **40** (e.g., the outer diameter, length, and wall thickness) may be substantially equivalent to the dimensions of inner bellows **42;** however, this need not be the case in all embodiments.

Damper housing **22** further includes an intervening structure or internal body, which is disposed between inner bellows **40** and inner bellows **42** and which separates the below-described hydraulic chambers. In the exemplary embodiment shown in FIGs. 1-3, this intervening structure assumes the form of a radially-extending partition wall **38.** Partition wall **38** has a generally disc-shaped geometry and extends radially inward from the annular sidewall or tubular body **28** of damper housing **22** toward the centerline or working axis **12** of isolator **10.** Outer bellows **44** and inner bellows **40** are positioned on a first side of radially-extending partition wall **38,** while inner bellows **42** and outer bellows **46** are positioned on a second, opposing side of partition wall **38.** Partition wall **38** may be integrally formed with tubular housing body **28** as a single machined piece or, instead, fabricated as a discrete piece that is subsequently joined to tubular body **28** by, for example, welding. More generally, damper housing **22** can be produced from any number of discrete components, which may assembled or joined together utilizing bolts or other fasteners, bonding, welding, threaded interfaces, or any other joinder technique or hardware.

Damper piston **20** (FIGs. 2 and 3) includes three main features or portions, namely, a first radial flange or bellows plate **48,** as second radial flange or bellows plate **50,** and a piston shaft **52** fixedly joining bellows plates **48** and **50.** Bellows plates **48** and **50** thus extend radially outward from opposing ends of piston shaft **52.** Bellows plates **48** and **50** are positioned on opposing sides of partition wall **38,** and piston shaft **52** extends through a central opening **54** provided in wall **38** to join bellows plate **48** to bellows plate **50.** Such a structural configuration (referred to herein as a "through-shaft" configuration or design) provides multiple benefits, as will described more fully below. In the illustrated embodiment, piston shaft **52** is generally co-axial with or extends along the centerline or working axis **12** of isolator **10** and is circumscribed by inner bellows **40,** inner bellows **42,** and partition wall **38.** Additionally, bellows plates **48** and **50** may each be fabricated to have an outer diameter exceeding the diameter of central opening **54** in partition wall **38.** Damper piston **20** may be produced as single machine piece or, instead, assembled from multiple discrete pieces. Similarly, damper piston **20** (or a portion of piston **20**) may be integrally formed with connector rod **18** or, instead, joined thereto utilizing, for example, a threaded interface.

Moving from left to right in FIGs. 2 and 3, outer bellows **44** is sealingly joined between an inner wall of damper housing **22** and a first face of bellows plate **48;** while inner bellows **40** is sealingly joined between a second, opposing face of bellows plate **48** and a first surface of partition wall **38.** Inner bellows **42** is further sealingly joined between a second, opposing surface of partition wall **38** and a first face of bellows plate **50.** Finally, outer bellows **46** is sealingly joined between a second, opposing face of bellows plate **50** and the inner wall of housing **22** through which opening **30** is formed. The inner circumferential edges of inner bellows **40** and **42** may be joined to partition wall **38** adjacent central opening **54.** Circumferential welding, bonding, or any joining technique capable of creating a fluid-tight bonds may be utilized to create the required joints between bellows **40, 42, 44,** and **46** and the surrounding structures. By virtue of this construction, damper piston **20** is resiliently suspended within damper housing **22** and may translate with respect thereto along working axis **12.**

Fluid damper **14** further includes opposing hydraulic chambers **56** and **58** contained within damper housing **22.** Hydraulic chamber **56** is generally defined by the outer circumference of outer bellows **44,** bellows plate **48,** the outer circumference of inner bellows **40,** and damper housing **22** including partition wall **38.** Similarly, hydraulic chamber **58** is generally defined by the outer circumference of inner bellows **42,** bellows plate **50,** the outer circumference of outer bellows **46,** and damper housing **22** including partition wall **38.** Radially-extending partition wall **38** is located between and generally separates or divides hydraulic chambers **56** and **58.** One or more restricted orifices **60** (two of which are shown in FIGs. 2 and 3) are formed in partition wall **38** and fluidly couple hydraulic chambers **56** and **58.** As can be seen, restricted orifices **60** may assume the form of non-annular channels or openings formed through partition wall **38.** Any number of restricted orifices **60** can be formed through radially-extending partition wall **38**. In many cases, multiple orifices **60** will be formed through partition wall **38** and angularly spaced about working axis **12** of isolator **10** for radial symmetry. In still further embodiments, restricted orifices may be formed in the annular sidewall **28** to fluidly couple hydraulic chambers **56** and **58** in addition to or in lieu of the formation of orifices through partition wall **38.**

Isolator **10** may initially be produced and distributed without damping fluid, in which case fluid damper **14** may be filled with a selected damping fluid at a chosen juncture after production and prior to deployment of isolator **10.** Isolator **10** is illustrated in FIG. 2 in an unfilled state and in a filled state in FIG. 3 (wherein the damping fluid is represented by dot stippling). Filling of fluid damper **14** may be accomplished utilized a non-illustrated fill port, which can be sealed (e.g., via deformation of a metal ball) after filling. As can be seen most readily in FIG. 3, bellows **40, 42, 44,** and **46** are externally-pressurized; that is, damping fluid acts on the outer surfaces of bellows **40, 42, 44,** and **46** during operation of fluid damper **14.** Advantageously, the usage of externally-pressurized bellows decreases the likelihood of buckling or "squirm" as compared to internally-pressurized bellows. Additionally, the externally-pressurized nature of inner bellows **40** and **42** allow an annular air gap or circumferential clearance to be formed between piston shaft **52** and hydraulic chambers **56** and **58,** which provides several advantages as described more fully below.

The size, shape, number, and spatial distribution of restricted orifices **60** are limited only by the dimensions of partition wall **38** (and/or by the annular sidewall **28** of damper housing **22,** if orifices are formed therethrough). The dimensions and geometries of restricted orifices **60** can thus be adjusted, as appropriate, to tailor isolator **10** to a particular application or usage. Thus, in embodiments wherein it is desired to fill isolator **10** with a very low viscosity damping fluid for operation at extremely depressed temperatures, orifices **60** can be produced to have highly restricted dimensions providing that at least a minimal amount of damping fluid can still flow between hydraulic chambers **56** and **58.** For example, in the illustrated example wherein restricted orifices **60** have generally planform circular shapes, as viewed along working axis, the diameters of orifices **60** can be minimized. The length of orifices **60** can also be adjusted, as may be desired, by increasing or decreasing the thickness of radially-extending partition wall **38,** by forming orifices **60** at oblique angles relative to working axis **12,** and/or by forming orifices **60** to follow non-linear paths (e.g., curved or spiral shaped paths) through partition wall **38.**

During operation of isolator **10,** relative axial movement occurs between damper housing **22** and damper piston **20,** as well as those component rigidly joined to piston **20** (i.e., connector rod **18** and end piece **16**). Bellows **40, 42, 44,** and **46** expand and compress, as needed, to accommodate such relative axial movement between damper piston **20** and damper housing **22.** As bellows **40,42,44,** and **46** expand and contract, the respective volumes of chambers **56** and **58** vary, and damping fluid is forced through restricted orifices **60.** Specifically, as damper piston **20** strokes away from mount point **32** (to the right in FIGs. 1-3), the volume of hydraulic chamber **56** decreases, the volume of hydraulic chamber **58** increases, and damping fluid flows from chamber **56,** through orifices **60,** and into chamber **58.** Conversely, as damper piston **20** strokes toward mount point **32** (to the left in FIGs. 1-3), the volume of hydraulic chamber **56** increases, the volume of hydraulic chamber **58** decreases, and damping fluid flows from chamber **58,** through orifices **60,** and into chamber **56.** The flow of damping fluid through restricted orifices **60,** and the resulting viscous losses, provide the desired damping effect by dissipating the kinetic energy transmitted through isolator **10.** One or more vent holes **62** may be formed through bellows plate **48** and/or bellows plate **50** inboard of hydraulic chambers **56** and **58** to avoid the creation of a sealed air volume and facilitate deflection of inner bellows **40** and **42.**

As indicated above, the volumes of hydraulic chambers **56** and **58** vary in conjunction with movement of piston **20** and deflection of bellows **40, 42, 44,** and **46.** The variance in volumes of hydraulic chambers **56** and **58** is brought about by the disparity in diameters between outer bellows **44** and inner bellows **40,** as well as the disparity in diameters between inner bellows **42** and outer bellows **46.** Additionally, bellows plate **48** is sized to have an outer diameter greater than the outer diameter of inner bellows **40** such that an annular region or band **64** (identified in FIG. 3) is created on the face of plate **48** opposite outer bellows **44,** which is exposed to damping fluid when hydraulic chamber **56** is filled therewith. Similarly, bellows plate **50** is sized to have an outer diameter greater than the outer diameter of inner bellows **40** such that an annular region or band **66** (identified in FIGs. 2 and 3) is created on the face of plate **50** opposite outer bellows **46,** which is exposed to damping fluid when hydraulic chamber **56** is filled therewith. The outer diameters of bellows plates **48** and **50** may also exceed the diameter of inner bellows **40** and **42,** central opening **54** in partition wall **38,** and central opening **30** in end portion **26** of damper housing **28.** By comparison, inner bellows **40** and **42** may be sized to have outer diameters greater than the diameter of central opening **54** in partition wall **38** and perhaps less than diameter of central opening **30** in end portion **26** of damper housing **28**. However, these dimensions may vary in alternative embodiments, as may the general design of the isolator. Furthermore, while outer bellows **44** and **46** are sized to have larger outer diameters as compared inner bellows **40** and **42** in the illustrated example, outer bellows **44** and **46** may be sized to have smaller outer diameters relative to inner bellows **40** and **42** in further embodiments.

As described above, damper piston **20** is characterized by a "through-shaft" design such that piston shaft **52** extends axially along working axis **12** or the centerline of isolator **10** to provide a direct and stiff mechanical connection between bellows plates **48** and **50**. Relative to other, more complex designs utilized to couple opposing bellows plates (e.g., bellows plates **48** and **50** shown in FIGs. 2 and 3), such a through-shaft configuration may provide several advantages including lower part count, decreased weight, and reduced envelope size. Additionally, such a through-shaft design may reduce the preload pressure requirements of fluid damper **14.** Furthermore, damper piston shaft **52** does not bound an annulus or otherwise define a restricted flow orifice fluidly coupling the hydraulic chambers. Instead, an annular air gap or tubular void is created around and surrounds piston shaft **52.** This annular air gap is bounded along its outer circumference by externally-pressurized inner bellows **40** and **42,** as well as by central opening **54** provided in partition wall **38.** The annular air gap provided around piston shaft **52** is also circumscribed by opposing hydraulic chambers **56** and **58.** In this manner, orifice size is effectively decoupled from or rendered independent of the clearances provided around piston shaft **52** and, therefore, the rotational angle of capabilities of isolator **10;** that is, the ability of isolator **10** to accommodate relatively large angular misalignments between mount points **32** and **34** and corresponding large rotational displacements between damper piston **20** and damper housing **22,** as taken about axes orthogonal to working axis **12** (identified as the "Y-" and "Z-axes" by coordinate legend **68** in FIG. 3). The rotational angle capacity of isolator **10** is instead generally determined by the clearances provided between damper piston **20** and the interior surfaces of damper housing **22,** as described more fully below.

To allow isolator **10** and, specifically, fluid damper **14** to accommodate relatively large rotational displacements between damper piston **20** and damper housing **22**, several annular gaps or circumferential clearances are provided between damper piston **20** and the interior surfaces of housing **22**. These circumferential clearances include: (i) a first circumferential clearance between bellows plate **48** and an inner circumference surface of damper housing **22** (identified in FIG. 3 as "C_{R1}"), (ii) a second circumferential clearance between piston shaft **52** and the inner surface of partition wall **38** defining opening **54** (identified in FIG. 3 as "C_{R2}"), and (iii) a third circumferential clearance between bellows plate **50** and the inner circumference surface of damper housing **22** (identified in FIG. 3 as "C_{R3}"). A fourth circumferential clearance (identified in FIG. 3 as "C_{R4}") is also provided between connector rod **18** and opening **30** in housing end portion **26** to prevent contact between connector rod **18** and damper housing **22** as damper piston **20** rotates with respect thereto. The respective sizes of C_{R1}, C_{R2}, C_{R3}, and C_{R4} will vary amongst embodiments of isolator **10** and can be adjusted independent of dimensions of restricted orifices **60.** Thus, C_{R1}, C_{R2}, C_{R3}, and C_{R4} can be chosen to impart isolator **10** with a relatively broad rotational angle capacity, while simultaneously imparting orifices **60** with relatively restrictive or tight dimensions. In one embodiment, C_{R1}, C_{R2}, C_{R3}, and C_{R4} are each chosen have a radial width greater than the radius of connector rod **18**.

The rotational angle capabilities of isolator **10** may be further enhanced by minimizing the axial thicknesses of bellow plates **48** and **50** (as taken along working axis **12**) and the longitudinal length of opening **54** in radially-extending partition wall **38.** In the latter regard, it will be noted that axial thickness of partition wall **38** remains constant in the illustrated example, as considered when moving radially inward from the tubular body **28** of damper housing **22** toward working axis **12.** The longitudinal length of opening **54** is thus substantially equivalent to the length of restricted orifices **60.** However, in further embodiments, radially-extending partition wall **38** may decrease (e.g., taper or step downward) in axial thickness when moving radially inward toward working axis **12** such that the axial length of central opening **54** is less than the length of the restricted orifices **60** formed in partition wall **38.**

The foregoing has thus provided embodiments of an isolator including a fluid damper and enabling orifice size to be adjusted independently of the rotation angle capability of the isolator. Embodiments of the isolator can be produced to include highly restricted damper orifices, while also having a relatively broad rotational angle capacity. In embodiments wherein the isolator includes highly restricted orifices, the isolator may be well-suited for usage at low operative temperatures (e.g., temperatures less than -30°C and possibly approaching or falling below -65°C) and with damping fluids having very low viscosities (e.g., silicone-based damping liquids having a viscosity less than about 10 cS). This notwithstanding, it is emphasized the embodiments of the isolator need not be utilized in conjunction with a low viscosity damping fluid nor include highly restricted orifices in all embodiments. Due, at least in part, to the incorporation of a through-shaft design, embodiments of the isolator may also provide relatively compact envelopes, low weights, low spring masses, and reduced pressure preload requirements. As a still further benefit, embodiments of the isolator may be characterized by relatively a small sprung mass, which may favorably increase the internal isolator modes (radial and axial) and the operational frequency bandwidth of the isolator.

While at least one exemplary embodiment has been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. It being understood that various changes may be made in the function and arrangement of elements described in an exemplary embodiment without departing from the scope of the invention as set-forth in the appended claims.

## Claims

1. An isolator (10) having a working axis (12), comprising:
a damper housing (22), comprising:
a radially-extending partition wall (38); and
a central opening (30) formed through the radially-extending partition wall;
first and second hydraulic chambers (56, 58) located on opposing sides of the radially-extending partition wall and configured to be filled with a damping fluid;
at least one restricted orifice (60) formed through the damper housing and fluidly coupling the first and second hydraulic chambers; and
a damper piston (20) extending through the central opening, exposed to the damping fluid when the first and second hydraulic chambers are filled therewith, and configured to translate along the working axis with respect to the damper housing during operation of the isolator.

2. The isolator (10) of Claim 1 wherein the at least one restricted orifice (60) is formed through the radially-extending partition wall (38).

3. The isolator (10) of Claim 2 wherein the at least one restricted orifice (60) comprises a plurality of channels (60) formed through the radially-extending partition wall (38) and angularly spaced about the working axis (12).

4. The isolator (10) of Claim 1 wherein the damper piston (20) comprises a piston shaft (52) extending through the central opening (30) and substantially co-axial with the working axis (12).

5. The isolator (10) of Claim 4 comprising an annular air gap surrounding the piston shaft (52).

6. The isolator (10) of Claim 4 wherein the damper piston (20) further comprises:
a first bellows plate (48) extending radially outward from a first end of the piston shaft (52) and partially defining the first hydraulic chamber (56); and
a second bellows plate (50) extending radially outward from a second, opposing end of the piston shaft and partially defining the second hydraulic chamber (58).

7. The isolator (10) of Claim 6 wherein the first bellows plate (48) and the second bellows plate (50) each have an outer diameter greater than the diameter of the central opening (30).

8. The isolator (10) of Claim 6 further comprising:
a first inner bellows (40) sealingly coupled to the first bellows plate (48) and partially bounding the first hydraulic chamber (56); and
a second inner bellows (42) sealingly coupled to the second bellows plate (50) and partially bounding the second hydraulic chamber (58);
wherein the first and second inner bellows (40, 42) are sealingly joined to opposing surfaces of the radially-extending partition wall (38).

9. The isolator (10) of Claim 8 further comprising:
a first outer bellows (44) sealingly coupled to the first bellows plate (48) opposite the first inner bellows (40) and partially bounding the first hydraulic chamber (56); and
a second outer bellows (46) sealingly coupled to the second bellows plate (50) opposite the second inner bellows (42) and partially bounding the second hydraulic chamber (58).

10. The isolator (10) of Claim 1 wherein the damper housing (22) further comprises a tubular body (28) from which the radially-extending partition wall (38) extends in a radially inward direction, the tubular body (28) bounding an outer circumference of the first hydraulic chamber (56) and an outer circumference of the second hydraulic chamber (58).
